# EUROPEAN PATENT APPLICATION

(11) **EP 4 657 880 A1**
(43) Date of publication of application: **03.12.2025**
(21) Application number: 24777558.8
(22) Date of filing: 19.02.2024
(51) Int. Cl.: H04Q 11/00

(54) **OPTICAL TRANSPORT NETWORK SERVICE ACTIVATING METHOD, ELECTRONIC DEVICE, AND SYSTEM**

(30) Priority: 30.03.2023 CN 202310353251
(71) Applicant: Huawei Technologies Co., Ltd., Shenzhen, Guangdong 518129 (CN)
(72) Inventor: ZENG, Guanyin, Shenzhen, Guangdong 518129 (CN); LI, Tianshu, Shenzhen, Guangdong 518129 (CN); JIANG, Youyu, Shenzhen, Guangdong 518129 (CN); CHENG, Xinlin, Shenzhen, Guangdong 518129 (CN); GUO, Jiming, Shenzhen, Guangdong 518129 (CN); WANG, Yonglong, Shenzhen, Guangdong 518129 (CN); SHEN, Heng, Shenzhen, Guangdong 518129 (CN); WANG, Jinbo, Shenzhen, Guangdong 518129 (CN); BAO, Pingchu, Shenzhen, Guangdong 518129 (CN); ZHANG, Mingyu, Shenzhen, Guangdong 518129 (CN)
(74) Representative: Gill Jennings & Every LLP
(86) International application number: PCT/CN2024/077613
(87) International publication number: WO 2024/198765

(57) **Abstract**

Embodiments of this application provide an optical transport network service provisioning method, an electronic device, and a system. Applied to a server, the method includes: obtaining a target service type, a target port rate, and a target port signal type of an optical transport network service; and determining a target port of target customer-premises equipment CPE based on an association relationship among a service type, a port rate, a port signal type, and CPE, where the target port of the target CPE supports the target service type, the target port rate, and the target port signal type, and the target port of the target CPE is configured to establish an optical path of the optical transport network service. In the method, a device port corresponding to the optical transport network service does not need to be manually configured, so that service provisioning duration can be effectively shortened.

## Description

This application claims priority to Chinese Patent Application No. 202310353251.7, filed with the China National Intellectual Property Administration on March 30, 2023 and entitled "OPTICAL TRANSPORT NETWORK SERVICE PROVISIONING METHOD, ELECTRONIC DEVICE, AND SYSTEM", which is incorporated herein by reference in its entirety.

### TECHNICAL FIELD

This application relates to the field of communication technologies, and specifically, to an optical transport network service provisioning method, an electronic device, and a system.

### BACKGROUND

In recent years, with digital and Internet-based transformation in various industries, private line service requirements of an optical transport network (Optical Transport Network, OTN) increase rapidly. An annual growth rate of a quantity of private line circuits is over 10%. It is estimated that the quantity of private line circuits and a bandwidth will continue to increase rapidly in the next few years.

Currently, service configuration of the optical transport network is manual dependent, and complex since configuration of a plurality of parameters such as service type, device, and port are involved. As a result, an optical transport network service provisioning periodicity is long, provisioning efficiency is low, and errors are prone to occur.

### SUMMARY

Embodiments of this application disclose an optical transport network service provisioning method, an electronic device, and a system. In embodiments of this application, the electronic device may automatically generate a service parameter of an optical transport network service. The service parameter may include a service type, a port rate, a port signal type, and a port of customer-premises equipment CPE of the optical transport network service, and the service parameter is for provisioning of the optical transport network service. In the method, no manual service configuration is required, so that service provisioning duration can be effectively shortened.

According to a first aspect, an embodiment of this application discloses an optical transport network service provisioning method, applied to a server. The method includes:
obtaining a target service type, a target port rate, and a target port signal type of an optical transport network service; and
determining a target port of target customer-premises equipment CPE based on an association relationship among a service type, a port rate, a port signal type, and CPE, where the target port of the target CPE supports the target service type, the target port rate, and the target port signal type, and the target port of the target CPE is configured to establish an optical path of the optical transport network service.

In this embodiment of this application, the server determines, based on the association relationship among the service type, the port rate, the port signal type, and the customer-premises equipment CPE, a port of CPE equipment that supports the target service type, the target port rate, and the target port signal type as the target port of the target CPE.

In the method, the target port is determined by using the foregoing association relationship, without manually and empirically determining a port of CPE required for provisioning an optical transport network service. This implements automatic determining of a device port, so that manual errors can be avoided, and provisioning efficiency of the optical transport network service can be improved.

With reference to the first aspect, in a possible implementation, the association relationship includes an association relationship of the target CPE, the association relationship of the target CPE includes at least one board on the target CPE, at least one port on the at least one board, and a service type, a port rate, and a port signal type that are supported by the at least one port, and the at least one port includes the target port.

In this embodiment of this application, the server may obtain board information (for example, at least one board on the target CPE) of each of a plurality of pieces of CPE, port information (for example, at least one port on the at least one board on the target CPE) of the board, port information of the board on the CPE, and a service type, a port rate, and a port signal type that are supported by the port. This method can free from dependence on manual experience and reduce errors by obtaining association information.

With reference to the first aspect, in a possible implementation, the target port of the target CPE includes a device identifier of the target CPE, position information of the target port on a target board of the target CPE, and position information of the target board on the target CPE.

In this embodiment of this application, the association relationship may further include a position relationship among a device, a board, and a port, to determine a specific position of the target port. The specific position may be the device identifier of the target CPE, the position information of the target port on the target board of the target CPE, and the position information of the target board on the target CPE.

With reference to the first aspect, in a possible implementation, the determining a target port of target customer-premises equipment CPE based on an association relationship among a service type, a port rate, a port signal type, and CPE includes:
generating a knowledge graph based on the association relationship, where the knowledge graph includes a board, a port, a device, a first relationship edge, and a second relationship edge, the first relationship edge indicates an association relationship between CPE and a board, and the second relationship edge indicates an association relationship among a board and a port, and a service type, a port rate, and a port signal type that are supported by a port on a board;
searching the knowledge graph for a second relationship edge that supports the target service type, the target port rate, and the target port signal type;
determining the target board and the target port based on the found second relationship edge; and
determining the target CPE based on a first relationship edge corresponding to the target board.

In this embodiment of this application, the association relationship is indicated by using the knowledge graph, so that the association relationship among the service type, the port rate, the port signal type, and the customer-premises equipment CPE can be more clearly represented, and processing efficiency can be effectively improved.

With reference to the first aspect, in a possible implementation, the obtaining a target service type, a target port rate, and a target port signal type of an optical transport network service includes:
obtaining a service intent of an optical transport network service, where the service intent includes a source address, a sink address, and a target bandwidth; and
determining the target service type, the target port rate, and the target port signal type based on the service intent.

In this embodiment of this application, the target service type, the target port rate, and the target port signal type of the optical transport network service may be determined based on the service intent of the optical transport network service.

According to the method, the target service type, the target port rate, and the target port signal type of the optical transport network service for meeting the service intent can be automatically determined, without manual determining. This can improve an automation degree of service provisioning, avoid manual errors, and improve determining efficiency.

With reference to the first aspect, in a possible implementation, the determining the target service type, the target port rate, and the target port signal type includes:
determining the target service type based on a target distance between the source address and the sink address and the target bandwidth, where the optical transport network service of the target service type supports the target distance and the target bandwidth;
determining, based on the target bandwidth, the target port rate from port rates supported by the target service type, where the target port rate supports the target bandwidth; and
determining the target port signal type from port types supported by the target service type.

With reference to the first aspect, in a possible implementation, the determining the target service type includes:
obtaining service types that support the target distance and the bandwidth; and
determining, based on a price and stability of the service type, the target service type from the obtained service types.

With reference to the first aspect, in a possible implementation, the obtaining a service intent of the optical transport network service includes: receiving an obtaining request sent by a terminal device, where the obtaining request includes the service intent of the optical transport network service; and
after the determining a target port of target customer-premises equipment CPE, the method further includes: sending a response message to the terminal device, where the response message includes the target port of the target CPE; and the terminal device is configured to display the target port of the target CPE.

With reference to the first aspect, in a possible implementation, the response message further includes the target service type, the target port rate, and the target port signal type.

With reference to the first aspect, in a possible implementation, the target CPE includes a source device and/or a sink device, the target port of the target CPE includes a port of the source device and/or a port of the sink device, and the source device and the sink device are devices at two ends of the optical path of the optical transport network service.

In a possible implementation, the server may be a network cloud engine (Network Cloud Engine, NCE).

According to a second aspect, an embodiment of this application discloses an optical transport network service provisioning method, applied to a server. The method includes:
obtaining a service intent of an optical transport network service, where the service intent includes a source address, a sink address, and a target bandwidth; and
determining, based on the service intent, a target service type, a target port rate, and a target port signal type of the optical transport network service.

In this embodiment of this application, the target service type, the target port rate, and the target port signal type of the optical transport network service may be determined based on the service intent of the optical transport network service.

According to the method, the target service type, the target port rate, and the target port signal type of the optical transport network service for meeting the service intent can be automatically determined, without manual determining. This can improve an automation degree of service provisioning, avoid manual errors, and improve determining efficiency.

With reference to the second aspect, in a possible implementation, the determining a target service type, a target port rate, and a target port signal type of the optical transport network service includes:
determining the target service type based on a target distance between the source address and the sink address and the target bandwidth, where the optical transport network service of the target service type supports the target distance and the target bandwidth;
determining, based on the target bandwidth, the target port rate from port rates supported by the target service type, where the target port rate supports the target bandwidth; and
determining the target port signal type from port types supported by the target service type.

In this embodiment of this application, the target service type is determined based on a correspondence between a distance between a source address and a sink address, a bandwidth, and a service type; the target service type is determined based on a correspondence between a bandwidth, a service type, and a port rate; and the target port signal type is determined based on a correspondence between a port type and a service type.

According to the method, the target service type, the target port rate, and the target port signal type of the optical transport network service for meeting the service intent can be automatically determined, without manual determining. This can improve an automation degree of service provisioning, avoid manual errors, and improve determining efficiency.

With reference to the second aspect, in a possible implementation, the determining the target service type includes:
obtaining service types that support the target distance and the bandwidth; and
determining, based on a price and stability of the service type, the target service type from the obtained service types.

In a possible implementation, the server may be an NCE.

According to a third aspect, an embodiment of this application discloses an optical transport network service provisioning method, applied to a terminal device. The method includes:
displaying a work order, where the work order includes a service intent of an optical transport network service, and the service intent includes a source address, a sink address, and a target bandwidth;
sending an obtaining request to a server in response to a user operation on the work order, where the obtaining request includes the service intent, and the service intent is used by the server to determine a service parameter of the optical transport network service;
receiving a response message sent by the server, where the response message includes the service parameter; and
displaying the service parameter and/or a service parameter-based generated diagram, where the service parameter is for provisioning of the optical transport network service.

In this embodiment of this application, the service parameter for provisioning the optical transport network service may be determined based on the service intent of the optical transport network service.

According to the method, the service parameter of the optical transport network service for meeting the service intent can be automatically determined, without manual determining. This can improve an automation degree of service provisioning, avoid manual errors, and improve determining efficiency. In the method, an error rate of manual port selection can be reduced and automatic breakpoints can be streamlined, helping operators implement installation and provisioning of private line services in one day.

With reference to the third aspect, in a possible implementation, the service parameter includes at least one of the following: a target service type, a target port rate, a target port signal type, and a target port of target customer-premises equipment CPE of the optical transport network service.

The target port of the target CPE supports the target service type, the target port rate, and the target port signal type, and the target service type, the target port rate, and the target port signal type are determined based on the service intent.

In this embodiment of this application, customer service personnel only need to enter the source address, the sink address, and the target bandwidth on the terminal device, and may shield a device parameter, that is, does not need to enter device parameters such as the service type, the port rate, and the port signal type. The service, the device, and the port (that is, the target service type, the target port rate, the target port signal type, and the target port of the target customer-premises equipment CPE of the optical transport network service) are automatically recommended based on the input data. The service parameter and/or the service parameter-based generated diagram are/is displayed, to provide instruction in blind-mating of optical modules to installation and maintenance personnel. Application of this method has no restricted scenarios. Both OTN government and enterprise private lines and Internet private lines are supported. The optical module is plug-and-play onsite.

With reference to the third aspect, in a possible implementation, the service parameter includes the target port of the target customer-premises equipment CPE, the target port of the target CPE includes a device identifier of the target CPE, position information of the target port on a board of the target CPE, and position information of the board on the target CPE, the service parameter-based generated diagram is a port diagram, and the method further includes:
rendering the port diagram based on the target port of the target CPE, where the port diagram indicates a position of the target port in the target CPE.

In a possible implementation, the terminal device invokes a resource recommendation intent-based interface, inputs the source address, the sink address, and the target bandwidth, and receives a service parameter returned by invoking the interface.

In a possible implementation, the terminal device installs a related application (for example, the installation and maintenance application described below), the terminal device displays a work order through an application interface of the application, and the terminal device sends an obtaining request to the server in response to a user operation on the work order on the application interface.

According to a fourth aspect, this application provides an electronic device. The electronic device may include a memory and a processor. The memory may be configured to store a computer program. The processor may be configured to invoke the computer program, so that the electronic device performs the method according to the first aspect or any one of the possible implementations of the first aspect.

According to a fifth aspect, an embodiment of this application further provides a chip system. The chip system includes at least one processor and a communication interface. The communication interface is configured to send and/or receive data, and the at least one processor is configured to invoke a computer program stored in at least one memory, so that an apparatus in which the chip system is located implements the method according to any one of the foregoing aspects or any possible implementation of any one of the foregoing aspects.

According to a sixth aspect, an embodiment of this application discloses a computer-readable storage medium. The computer-readable storage medium stores a computer program. When the computer program is run on one or more processors, the method according to any one of the foregoing aspects or any possible implementation of any one of the foregoing aspects is performed.

According to a seventh aspect, an embodiment of this application discloses a computer program product. When the computer program product runs on one or more processors, the method according to any one of the foregoing aspects or any possible implementation of any one of the foregoing aspects is performed.

### BRIEF DESCRIPTION OF DRAWINGS

The following describes accompanying drawings used in embodiments of this application.
FIG. 1 is a diagram of an ONT private line service end-to-end provisioning method according to an embodiment of this application;
FIG. 2 is a diagram of an architecture of an optical transport network service provisioning system according to an embodiment of this application;
FIG. 3A is a diagram of a software architecture of a server 20 according to an embodiment of this application;
FIG. 3B is a diagram of an internal implementation of a knowledge recommendation module according to an embodiment of this application;
FIG. 4 is a schematic flowchart of an optical transport network service provisioning method according to an embodiment of this application;
FIG. 5 is a flowchart of a method for determining target service data and target port data according to an embodiment of this application;
FIG. 6 is a diagram of an interface corresponding to a northbound knowledge management system module according to an embodiment of this application;
FIG. 7 is a diagram of a knowledge graph according to an embodiment of this application;
FIG. 8 is a port diagram according to an embodiment of this application;
FIG. 9 is a flowchart of another optical transport network service provisioning method according to an embodiment of this application;
FIG. 10 is a diagram of a hardware structure of an electronic device 100 according to an embodiment of this application; and
FIG. 11 is a block diagram of a software structure of an electronic device 100 according to an embodiment of this application.

### DESCRIPTION OF EMBODIMENTS

The following describes embodiments of this application with reference to the accompanying drawings in embodiments of this application. It should be noted that in this application, terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a relative concept in a specific manner.

In embodiments of this application, "at least one" means one or more, and "a plurality of" means two or more. "At least one of the following items (pieces)" or an expression similar thereto means any combination of these items, including a singular item (piece) or any combination of plural items (pieces). For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, first information and second information are merely used to distinguish between different information, but do not indicate that the two types of information are different in content, priorities, sending sequences, importance, or the like.

First, definitions of technical terms in embodiments of this application are described.
(1) Optical transport network (Optical Transport Network, OTN): The optical transport network is a new communication network transport system based on wavelength division multiplexing and optical channel technologies. It includes optical add/drop multiplexing, optical cross-connection, optical amplification, and other network element devices. It has an ultra-large transport capacity, provides semantic transparency for carried signals, and implements protection and routing functions at an optical layer. It is a basic structure of an optical interconnection network.
(2) Private line service: The private line service is a point-to-point or point-to-multipoint dedicated and transparent digital channel provided by operators to meet self-networking requirements of customers. It may provide users with high-reliability and low-latency circuit services with different rates and availability levels. For example, the private line service may include government and enterprise private lines serving governments and enterprises.

First, for example, an optical transport network service provisioning method in the conventional technology is described.

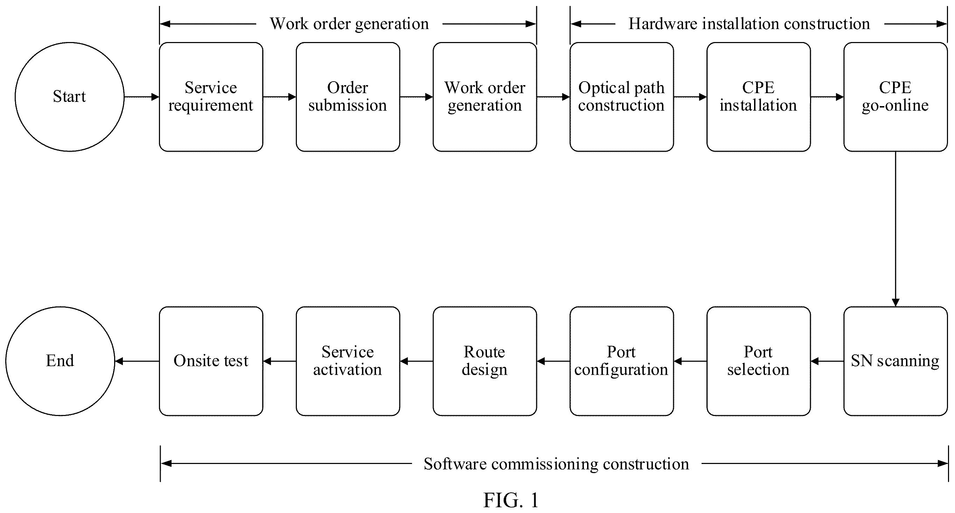

For example, FIG. 1 shows an OTN private line service end-to-end (E2E) provisioning method used by operators. The method mainly includes the following steps.
(1) A customer describes a private line service requirement. For example, the private line service requirement is "I want to provision a 100 Mbit/s private line from A to Z for three years and the private line needs to be stable." Customer service personnel fill in an order in a service provisioning system (SPS for short) based on the requirement provided by the customer, for example, selecting an A-end address, a Z-end address, a bandwidth, a service type, a port rate, and a port optical/electrical signal type.
(2) After submitting the order, the service provisioning system coordinates resources based on an integrated resource management system (RMS for short), generates a construction work order, and dispatches the work order to related construction personnel.
(3) A work order owner determines whether hardware installation construction personnel need to perform, depending on whether there is customer-premises equipment (Customer-premises Equipment, CPE) that meets the service at an A end and a Z end, first site visit to implement optical path construction, CPE installation, and CPE power-on.
(4) A supervisor performs operations such as CPE parameter configuration and network access and interworking on a network management system, to enable the CPE to go online.
(5) Software commissioning engineering personnel perform second site visit to find the CPE equipment, scan a serial number (Serial Number, SN) of the CPE equipment, and bind the CPE equipment to the work order.
(6) The software commissioning engineering personnel select a corresponding available client-side port on the CPE based on the service type, the port rate, and the port optical/electrical signal type (port signal type for short) and insert an optical module into the port.
(7) Operate delivering of a configuration path to configure an interface, to complete path calculation.
(8) Activate the interface based on the bandwidth, the service type, an ID of A-end CPE equipment resource, an A-end port, Z-end CPE equipment, and a delivered service, to complete circuit creation.
(9) A staff member performs tests by using meters to complete acceptance of private line provisioning.

In addition, in 2018, China Mobile Communications Co., Ltd. disclosed a technical solution with a patent number CN201610995861.7 and entitled "METHOD AND APPARATUS FOR PROVISIONING OPTICAL TRANSPORT NETWORK SERVICE".

This technical solution is applied to a source optical transport network OTN device node. Specific steps are as follows:
(1) Receive a service provisioning request from a customer, and convert the request into service configuration delivery parameters, including an A-end address, a Z-end address, a bandwidth, a service type, a port rate, and a port optical/electrical signal type, to generate a work order.
(2) Deliver the service provisioning request to a service management and control platform.
(3) Receive service path configuration performed by the service management and control platform based on service attribute information.
(4) Perform service configuration as a source node based on the service configuration information, and deliver service creation.

This technology has three definite restrictions: (1) An OTN device board supporting a plurality of types of services is not taken into consideration. A provisioning procedure described in this technology is an ideal service provisioning procedure during optical private line provisioning. A proportion of provisioned OTN device boards with a restriction of supporting only single service to existing device boards is less than or equal to 20%. Most OTN device boards support at least two types of services, and different ports correspond to different services. (2) Optical modules need to be inserted into ports of OTN device boards in advance. However, Insertion of optical modules on all ports is a huge waste of resources because optical modules are also important assets. (3) Customer service personnel need to understand a mapping relationship between a service intent described by the customer and bottom-layer parameters of a network. Once the mapping is incorrect, the provisioned service may not match the customer description, resulting in low satisfaction.

It can be learned that the method still depends on port selection by installation and maintenance personnel (I&M personnel for short), selection errors are prone to occur, and an automation degree is low.

Embodiments of this application provide an optical transport network service provisioning method, an electronic device, and a system. In the method, an electronic device may automatically generate a service parameter of an optical transport network service. The service parameter may include a service type, a port rate, a port signal type, and a port of customer-premises equipment CPE of the optical transport network service, and the service parameter is for provisioning of the optical transport network service.

In the method, the service parameter of the optical transport network service does not need to be manually determined, so that time for provisioning the optical transport network service can be reduced, and mistakes can be avoided caused by staff members due to insufficient experience or other reasons.

To describe the optical transport network service provisioning method provided in embodiments of this application more clearly and in detail, the following first describes an optical transport network service provisioning system provided in embodiments of this application.

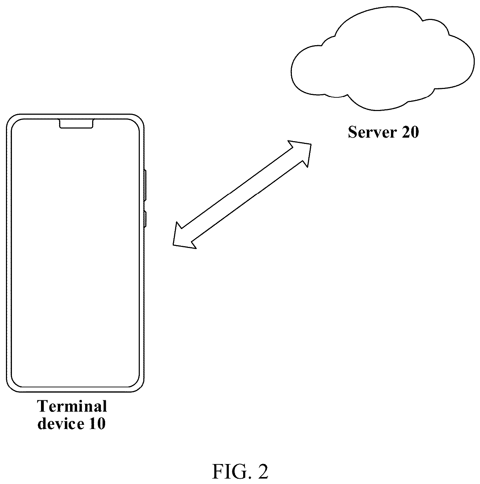

FIG. 2 is a diagram of an architecture of an optical transport network service provisioning system according to an embodiment of this application. As shown in FIG. 2, the system includes a terminal device 10 and a server 20.

In some embodiments, the terminal device may be an electronic device of a staff member. For example, the staff member may be installation and maintenance personnel responsible for an optical transport network service. The terminal device may receive and display a work order. The work order may include a service intent of an optical transport network that a customer wants to provision (for ease of description, the optical transport network service that the customer wants to provision is referred to as a target service in the following). The service intent may include a source address, a sink address, and a target bandwidth. The terminal device may generate an obtaining request based on the service intent in response to a user operation performed by the staff member on the work order, and send the obtaining request to the server. The server determines target service data and target port data in response to the obtaining request, where the target service data includes a target service type, a target port rate, and a target port signal type, and the target port data includes port information of a source device and a sink device. The server sends a response message to the terminal device, where the response message includes the target service data and the target port data. The terminal device renders a port diagram based on the target port data, and then displays the target service data and the port diagram, where the target service data and the port diagram are used by the staff member to provision the target service. For a specific process, refer to the following embodiments.

The server 20 may be one server, or may be a server cluster including a plurality of servers. This is not limited herein.

The terminal device 10 may be a mobile phone, a tablet computer, a desktop computer, a laptop computer, a handheld computer, a notebook computer, an ultra-mobile personal computer (ultra-mobile personal computer, UMPC), a netbook, or the like.

An example embodiment of the terminal device 10 includes, but is not limited to, a portable electronic device with iOS^{®}, Android^{®}, Harmony^{®}, Windows^{®}, Linux, or another operating system. The terminal device 10 may alternatively be another portable electronic device, for example, a laptop computer (Laptop).

In some other embodiments, the provisioning system may further include an operator terminal and an operator server. The operator terminal is configured to obtain a service intent of an optical transport network service. The operator server is configured to generate a work order based on the service intent, and send the work order to the terminal device 10. The terminal device 10 is an electronic device of a staff member (for example, installation and maintenance personnel). For example, a customer may go to a business hall of an operator and describe, to customer service personnel, a service intent that the customer wants to provision, for example, a bandwidth, a sink address, and a source address. Then, the customer service personnel enter the service intent on the operator terminal. Correspondingly, after receiving the service intent, the operator terminal sends the service intent to the operator server. The operator server generates a work order based on the service intent, and sends the work order to an application of a specific staff member.

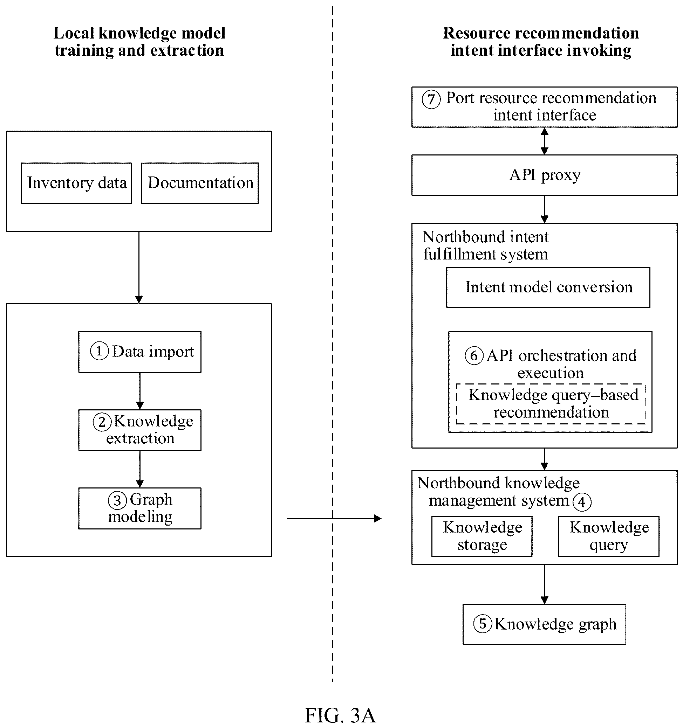

The following describes the foregoing server 20. For example, FIG. 3A is a diagram of a software architecture of the server 20. For example, the server 20 may be a network cloud engine (Network Cloud Engine, NCE).

As shown in FIG. 3A, the software architecture of the server 20 may include two parts: local knowledge model training and extraction, and resource recommendation intent interface invoking. The resource recommendation intent interface invoking includes a port resource recommendation intent interface (also referred to as an intent-based API), a northbound intent fulfillment system module, a northbound knowledge management system module, and a knowledge graph module.

The intent-based API is an intent-oriented resource autonomous domain closed-loop API. The API shields network parameter details, and delivers intent parameters (such as an address and a bandwidth) understood by a customer.

The northbound intent fulfillment system module may be a service module in NCE, and is configured to: receive and process a resource recommendation intent API, convert the resource recommendation intent API into an internal unified information model, and invoke an internal API by using an API programmable module to fulfill an objective of the resource recommendation intent API.

The northbound knowledge management system module provides capabilities of adding, deleting, modifying, and querying knowledge for a service module in NCE, allows system engineers to import and update knowledge on an interface, and supports knowledge-based retrieval and self-inference, for example, establish knowledge between customer service information (a bandwidth, a distance, availability, price sensitivity, and a VIP customer), network parameter information (a service, a port rate, and an optical/electrical attribute), and device resource information (CPE, a board, a port, and a service).

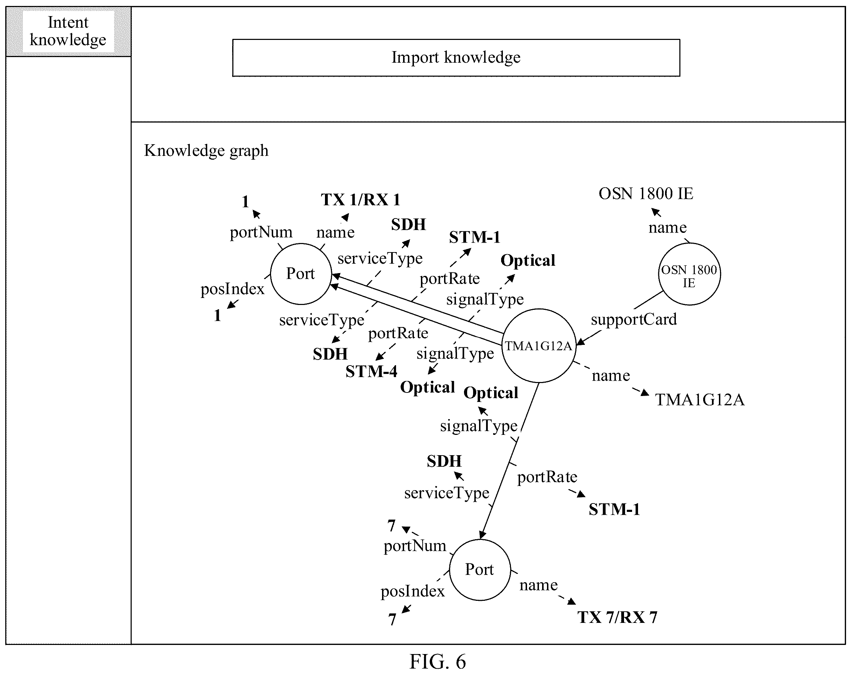

For example, for a diagram of an interface corresponding to the northbound knowledge management system module, refer to FIG. 6. It should be noted that, for ease of description, knowledge related to the network parameter information is referred to as network service knowledge, and knowledge related to the device resource information is referred to as device resource knowledge in the following.

The knowledge graph module may be a service module in NCE, and is configured to: store and manage knowledge, and store an association relationship among CPE equipment, a board, a port, and a service. The association relationship among the CPE equipment, the board, the port, and the service may be stored in a form of a knowledge graph.

The following separately describes the software architecture of the server 20 from two parts.

The first part is the local knowledge model training and extraction. Based on a trained local knowledge model, the server may extract knowledge from service data such as CPE equipment documentation by using the trained local knowledge model, to obtain knowledge about a device, a board, a port, and a service. The knowledge may include inventory data and documentation shown in FIG. 3A, where the inventory data is structured data (for example, device documents), and the documentation is unstructured data (for example, text documents such as a product specification). Then, the system engineer imports the knowledge on a knowledge import interface displayed on a terminal A, and the terminal A sends the knowledge to the server. ① The server imports the knowledge into a knowledge extraction module. Then, ② the server extracts the knowledge. ③ Graph modeling is performed on the extracted knowledge, to obtain a knowledge graph. ④ The server may send the obtained knowledge graph to the northbound knowledge management system, and the northbound knowledge management system stores the knowledge graph in the knowledge graph module. ⑤ The knowledge graph module is configured to store and manage knowledge.

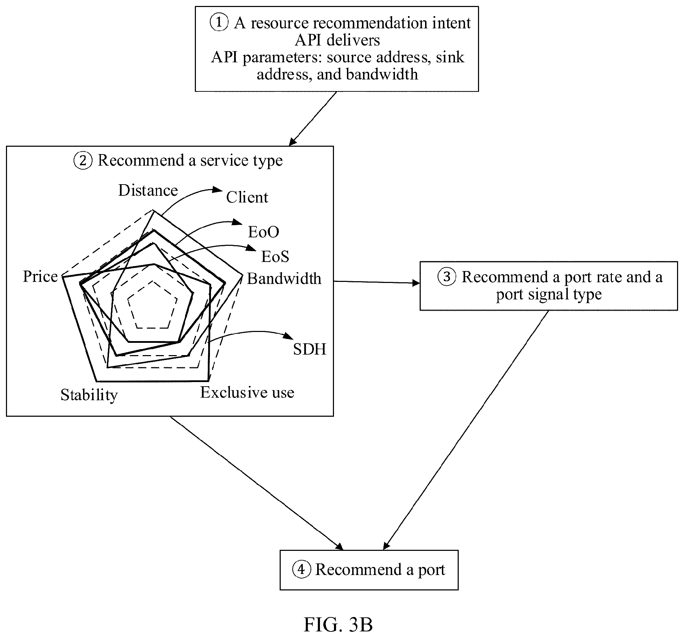

The second part is the resource recommendation intent interface invoking. ⑦ For example, after a service provisions a work order, installation and maintenance personnel hold a terminal B and invokes a resource recommendation intent interface through an installation and maintenance application (Application, APP) on the terminal B. The intention interface accesses the northbound intent fulfillment system module through authentication (API Proxy). The northbound intent fulfillment system module performs intent model conversion (which may specifically include internal parameter mapping). Further, ⑥ through an API orchestration layer, in a knowledge recommendation module, a resource is recommended based on the knowledge graph. For a specific recommendation process of the knowledge recommendation module, refer to FIG. 3B.

FIG. 3B is a diagram of an internal implementation of a knowledge recommendation module according to an embodiment of this application.

As shown in FIG. 3B, a recommendation process of the knowledge recommendation module mainly includes the following steps.
(1) Deliver parameters: A resource recommendation intent API delivers three mandatory parameters: a source address, a sink address, and a bandwidth.
   Optionally, the resource recommendation intent API may further deliver an optional parameter, where the optional parameter may include an available level and a service level. The available level is used to determine a level of protection for hardware such as CPE equipment and an optical fiber. For example, the available level may include full protection, partial protection, and non-protection, where full protection indicates that all preset hardware is protected, partial protection indicates that some hardware in the preset hardware is protected, and non-protection indicates that no protection is required. The service level indicates a common customer or a VIP (VIP) customer. Different customers may correspond to different price requirements or stability requirements.
(2) Recommend a service.

In an implementation, a service may be recommended based on a capability supported by the service and a delivered parameter. The capability supported by the service includes dimensions such as distance, transmission bandwidth, price, stability, and whether to support exclusive use. In embodiments of this application, a recommended service type may be referred to as a target service type.

It should be noted that different services are different in terms of dimensions such as distance, transmission bandwidth, price, stability, and whether to support exclusive use.

For example, FIG. 3B shows differences between five types of services including synchronous digital hierarchy (Synchronous Digital Hierarchy, SDH), Ethernet over OTN (Ethernet over OTN, EoO), Ethernet over SDH (Ethernet over SDH, EoS), and client-side (Client), in five dimensions including distance, transmission bandwidth (bandwidth for short), price, stability, and whether to support exclusive use. (1) The SDH service is used for intra-province transmission with a distance less than 25 km, has a bandwidth ranging from 155 Mbit/s to 2 Gbit/s, generally less than 400 Mbit/s, has a relatively low price, are generally based on electrical transmission, has very good stability, and can only channel exclusive. (2) The EoS service is used for intra-province transmission with a distance less than 100 km, has a bandwidth less than 50 Mbit/s, has an average price, supports optical and electrical transmission, has weak stability, and can be channel sharable. (3) The EoO service is used for cross-province or intra-province transmission with a distance greater than 100 km, has a bandwidth less than 10 Gbit/s, has a relatively high price, supports optical and electrical transmission, has average stability, and supports exclusive and shared use. (4) The client service is used for cross-province backbone network transmission with a distance far greater than 100 km, has a very high price, is used for optical transmission, has good stability, and supports only exclusive use. Capabilities supported by different services form network service knowledge, that is, the network service knowledge may include information such as distances, bandwidths, and prices supported by different services.

In an implementation, a distance may be first calculated based on a source address and a sink address in a delivered parameter, and a first service type that supports the distance and a target bandwidth is determined from different services based on the distance, a bandwidth (which may be referred to as the target bandwidth) in the delivered parameter, and distances and bandwidths supported by different services.

There may be one or more first service types.

When the first service type is a plurality of service types, the first service types may be sorted based on stability and price factors with reference to existing device support conditions at source and sink ends, and a service type that ranks first (TOP 1) in the first service types is used as a recommended service type (that is, a target service type).

A sorting method may be separately setting corresponding weights and scores for a price and stability, calculating scores of different services, and sorting the services based on the scores.

For example, if the first service type includes a service 1, a service 2, and a service 3, and a source device does not support the service 1, the service 2 and the service 3 may be sorted based on stability and price factors, and a service type that ranks first in the service 2 and the service 3 is used as the recommended service type.

(3) Recommend a port rate and a port signal type.

First, a port rate is recommended based on the recommended service type (that is, the target service type) and the target bandwidth. In this embodiment of this application, the recommended port rate may be referred to as a target port rate.

For example, if the target bandwidth is 100 Mbit/s and the service type is the SDH, the recommended port rate may be STM-1 (which may support 155 Mbit/s).

A recommendation principle may be a minimum bandwidth matching principle, that is, a port rate that supports a bandwidth greater than and closest to the target bandwidth in port rates supported by the target service type is determined as the recommended port rate.

Further, a port signal type may be recommended based on the target service type and stability. The port signal type includes optical and electrical, and electrical stability is higher than optical stability.

In some embodiments, when a transmission mode supported by the target service type includes electrical, the port signal type may be recommended as electrical when high stability is required. For example, the SDH service can be based on electrical transmission. If there is a clear requirement for high stability (such as a high available level), the port signal type may be recommended as electrical.

In some embodiments, if a sink device or a source device supports only a specific port signal type for the target service type, the specific port signal type may be determined as the target port type. For example, if a board TMA1G12A supports only an SDH service optical port, the recommended signal type is optical.

(4) Perform port recommendation.

In this embodiment of this application, port recommendation may be separately performed on the sink and the source according to a same recommendation principle.

Herein, the source is used as an example for description.

In some embodiments, a list of pieces of existing CPE equipment at the source may be obtained, that is, pieces of CPE equipment at a source address are traversed; all boards of the CPE equipment are traversed; and a port is matched based on a knowledge graph and based on the target service type, the target port rate, and a target port signal type.

The knowledge graph stores association knowledge between CPE equipment, a board, a port, and a service (that is, a service type, a port rate, and a port signal type).

For example, CPE equipment "OptiX OSN 1800 I E" supports a board TMA1G12A. The board supports the SDH service, a port rate is STM-1, and a port whose port signal attribute is optical is a port 1/2/7/8. Therefore, if the service type is the SDH, the port rate is STM-T, and the optical/electrical attribute is optical, any one of the port 1/2/7/8 on the board TMA1G12A in a slot 1 is recommended for the "OptiX OSN 1800 I E".

The following describes in detail the optical transport network service provisioning method provided in embodiments of this application based on the diagram of the optical transport network service provisioning system shown in FIG. 2 and the diagram of the software architecture of the server shown in FIG. 3A.

It should be noted that in embodiments of this application, a user operation may be a touch operation (for example, a tap operation, a touch and hold operation, a slide-up operation, a slide-down operation, or a side-slide operation) of a user, or may be a non-contact operation (for example, an air gesture), or may be a voice instruction of a user. This is not specifically limited in embodiments of this application.

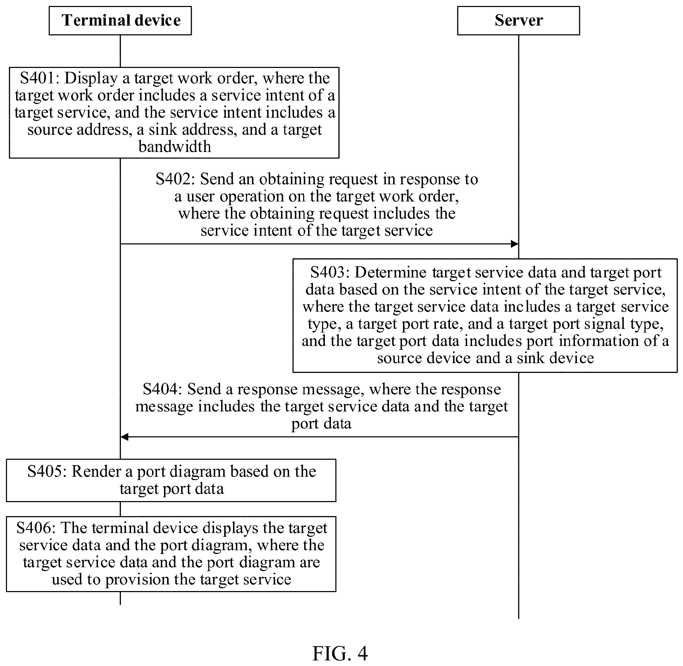

For example, FIG. 4 is a schematic flowchart of an optical transport network service provisioning method according to an embodiment of this application. The optical transport network service provisioning method may include some or all of the following steps.

Step S401: A terminal device displays a target work order, where the target work order includes a service intent of a target service, and the service intent includes a source address, a sink address, and a target bandwidth.

In a possible implementation, an installation and maintenance application (I&M application for short) is installed on the terminal device, and the terminal device may display the target work order on an application interface of the installation and maintenance application.

For example, the terminal device is a mobile phone of a staff member (for example, installation and maintenance personnel), and an installation and maintenance app is installed on the mobile phone. When receiving a target work order sent by a server (for example, an operator terminal) corresponding to the installation and maintenance app, the mobile phone may display the target work order. Correspondingly, the staff member may view the target work order by using the installation and maintenance app on the mobile phone.

The target service is an optical transport network service, and the service intent of the target service may be a requirement of an optical transport network service that a user wants to provision.

Optionally, the target work order may further include an optional parameter, for example, an available level and a service level.

The available level may include three levels: high, medium, and low. The available level is used to determine whether a protection policy needs to be executed and to affect stability. The service level may include a common customer and a VIP (vip) customer. The service level is used to determine service selection, and the like.

Optionally, the available level and the service level may use a default parameter when not explicitly required by the customer.

In a possible application scenario, the target work order is created by customer service personnel of an operator based on descriptions of the user. For example, the customer service personnel enter the service intent of the target service on the operator terminal based on the requirement descriptions of the customer. The operator terminal uploads the service intent of the target service to an operator server. The operator server creates, based on the service intent of the target service, the target work order corresponding to the target service, and dispatches the target work order to a staff member. The staff member may view the target work order on the installation and maintenance app, and a terminal device that displays the target work order is a terminal device of the staff member.

Step S402: The terminal device sends an obtaining request to the server in response to a user operation on the target work order, where the obtaining request includes the service intent of the target service.

Correspondingly, the server receives the obtaining request.

In some embodiments, the terminal device may display one or more work orders. Further, the terminal device sends an obtaining request to the server in response to a user operation on a target work order in the one or more work orders, where the obtaining request includes a source address, a sink address, and a target bandwidth that are in the target work order.

In some embodiments, the server provides a resource recommendation intent API for the terminal device, and then the terminal device may invoke the resource recommendation intent API to deliver three mandatory parameters: a source address, a sink address, and a target bandwidth. Optionally, the delivered parameter may further include an optional parameter, for example, an available level and a service level.

For example, the following shows a code implementation of the resource recommendation intent-based API delivered based on the 3GPP standard:

```
          {
              "userLabel": "resource recommendation",
              "intentFulfilStatus": "NOT FULFILLED",
              "intentExpectations": [
                  {
                      "expectationObject": {
                          "objectType": "NetworkIntent",
                          "objectInstance": "PortRecommendationService"
                      },
                      "expectationTargets": [
                          {
                              "targetName": "bandwidth",
                              "targetCondition": "Is_equal_to",
                              "targetvalueRange": "100000000"
                          },
                          {
                              "targetName": "availableLevel",
                              "targetCondition": "Is_equal_to",
                              "targetValueRange": "High"
                          }
                      ]
                  }
              ],
              "intentContexts": [
                  {
                      "contextAttribute": "aEndAddress",
                      "contextCondition": "Is_equal_to",
                      "contextvalueRange": "Room No. xx, Unit xx, Building xx, Community
                      xx, City xx, Province xx"
                  },
                  {
                      "contextAttribute": " zEndAddress",
                      " contextCondition": "Is_equal_to",
                      "contextvalueRange": "Room No. xx, Unit xx, Building xx, Community
                      xx, City xx, Province xx"
                  }
              ]
          }
```

It can be learned that the foregoing intent-based API defines two expected object targets, one is a bandwidth (bandwidth) expected to be provisioned, that is, the target bandwidth, in a unit of bit, and the other is an available level (availableLevel) of the provisioned service. In addition, two intent context parameters are defined, such as a source address (aEndAddress) and a sink address (zEndAddress). The source address and the sink address may be physical information descriptions on a specific map (for example, a door plate position shown in the foregoing code), or may be longitude and latitude coordinates, or may be user-defined coordinate orientation descriptions in a system. This is not limited herein.

Step S403: The server determines target service data and target port data based on the service intent of the target service, where the target service data includes a target service type, a target port rate, and a target port signal type, and the target port data includes port information of a source device and a sink device.

In some embodiments, the server may determine the target service type, the target port rate, and the target port signal type based on the source address, the sink address, and the target bandwidth, and further determine the port information of the source device and the sink device based on the target service type, the target port rate, and the target port signal type.

The source device is CPE equipment corresponding to the source address, and the sink device is CPE equipment corresponding to the sink address. For example, the CPE equipment may include a cable modem, a home router, various PCs, and the like. For example, the CPE equipment may be specifically an OptiX OSN 1800 series product, such as OptiX OSN 1800 I E.

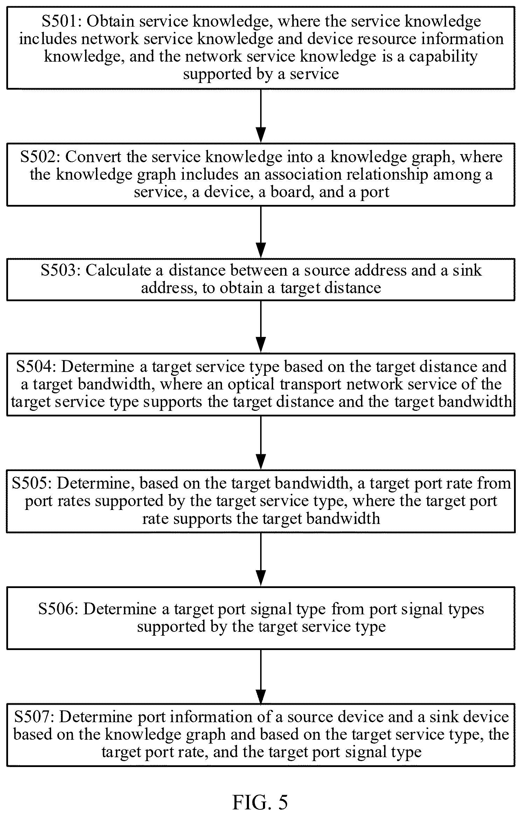

FIG. 5 is a flowchart of a method for determining target service data and target port data according to an embodiment of this application. The method may include some or all of the following steps.

S501: Obtain service knowledge, where the service knowledge includes network service knowledge and device resource information knowledge, and the network service knowledge is a capability supported by a service.

The network service knowledge is the capability supported by the service, for example, a distance, a bandwidth, a port rate, and a port signal type that are supported by the service, and a price. For example, refer to Table 1 in the following. The device resource information knowledge may include CPE equipment information and board information. The CPE equipment information may include a board supported by each slot of the CPE equipment and a service supported by the board. For example, refer to Table 2 and Table 3 in the following.

In some embodiments, a terminal A may display an NCE northbound knowledge management interface. For example, a diagram of the knowledge management interface may be shown in FIG. 6. A user (for example, a system engineer) imports the service knowledge on the NCE northbound knowledge management interface, the terminal A sends the service knowledge to a server, and correspondingly, the server receives the service knowledge.

FIG. 6 is a diagram of an interface corresponding to a northbound knowledge management system module according to an embodiment of this application.

As shown in FIG. 6, for example, FIG. 6 shows an import control and a preview interface of a knowledge graph. For example, a user may tap the import control to import related documents to the northbound knowledge management system. The northbound knowledge management system may generate a knowledge graph based on the imported documents and display the generated knowledge graph on the preview interface of the knowledge graph.

It should be understood that the interface shown in FIG. 6 is merely a possible example. In another implementation, the interface for importing the service knowledge may include more or less content. A specific form of the interface for importing the service knowledge is not limited herein.

In a possible implementation, the service knowledge obtained by the server may be in a form of a knowledge rule table. For example, the following shows several knowledge rule tables. Refer to the following Table 1 to Table 3.

Refer to Table 1. The network service knowledge may include several common service types shown in Table 1.

For example, Table 1 shows relationship mapping formed by each service type in a plurality of dimensions such as a transmission distance, a supported bandwidth, a price, stability, a transmission mode, and whether a channel supports shared use. For example, the server may import Table 1 into a knowledge base, to form knowledge used for service type recommendation.

**Table 1: Performance of common service types in each dimension**

| Service type | Distance | Bandwidth | Price | Stability | Transmission mode | Exclusive use |
|---|---|---|---|---|---|---|
| SDH | Generally 25 km, intra-province | 155 Mbit/s to 2 Gbit/s, generally less than 400 Mbit/s | Low | Very strong | Optical/Electrical | Exclusive use |
| EoS | Less than 100 km, intra-province | Less than 50 Mbit/s | Average | Weak | Optical/Electrical | Shared use |
| EoO | Greater than 100 km, cross-province or intra-province | Less than 10 Gbit/s | High | Average | Optical/Electrical | Exclusive use/Shared use |
| Client | Far greater than 100 km, provincial backbone | Greater than 10 Gbit/s | Very high | Strong | Optical | Exclusive use |

For example, Table 2 shows boards supported by OptiX OSN 1800 I E and physical slots into which the boards can be inserted. Board information may include a service type, a port rate, and a port signal type that are supported by each board. For example, Table 3 shows a port rate, a port signal type, and a port number that are supported by a board "TMA1G12A".

**Table 2 Boards supported by equipment "OptiX OSN 1800 I E"**

| CPE product name | Supported board name | Physical slot that can be inserted |
|---|---|---|
| OptiX OSN 1800 I E | TMA1G12A | [1] |
| | TMB2EFS8 | [3, 4] |
| | TMB3EFS8 | |
| | TMB1EFS8 | |
| | TNZ5EG10 | |
| | TNZ7EG10 | |
| | TMB1EGS4 | |
| | TMB2EGS4 | |
| | TMB3EGS4 | |
| | TNF1EGS4 | |
| | TMB1EMS10 | |
| | TMB3EMS10 | |

**Table 3 Services supported by the board "TMA1G12A"**

| Service type | Port rate | Port signal type | Port number |
|---|---|---|---|
| Client | STM-1 | Optical | [1, 2, 7, 8] |
| | STM-4 | Optical | [1, 2, 7, 8] |
| | STM-16 | Optical | [1, 2, 7, 8] |
| | STM-64 | Optical | [1, 2] |
| | FE | Optical | [1, 2, 7, 8] |
| | GE | Electrical | [] |
| | GE | Optical | [1, 2, 7, 8] |
| | 10GE LAN | Optical | [1, 2] |
| | 10GE WAN | Optical | [1, 2] |

S502: Convert the service knowledge into a knowledge graph, where the knowledge graph includes an association relationship among a service, a device, a board, and a port.

In some embodiments, the server may obtain the service knowledge, convert the service knowledge into the knowledge graph, and store the knowledge graph.

For example, the server may convert the knowledge rule table into a tuple expression, and store the tuple expression in the knowledge graph.

The knowledge graph indicates a correspondence between a device, a board, a port, and a service. The device, the board, and the port are entity objects. The device includes key attributes such as a device name and a device version. The board includes key attributes such as a board name and a board version. The port includes key attributes such as a port number (portNum) and a port name.

For example, in the knowledge graph, a device and a board may be connected through a relationship edge, indicating a board that can be inserted into the device, and the edge includes attributes such as slot information. There are N edges from the board to the port, indicating different services supported by a board port, and the edge includes attributes such as a service type, a port rate, and a port signal type, where N is an integer greater than 0.

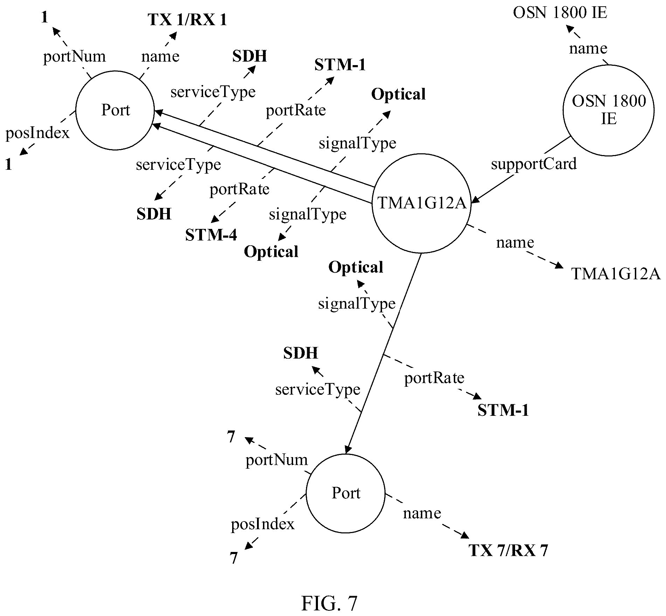

FIG. 7 is a diagram of a knowledge graph according to an embodiment of this application.

For example, FIG. 7 shows a board "TMA1G12A" supported by CPE equipment "OSN 1800 IE" and information about two ports included in the board "TMA1G12A". It should be understood that the knowledge graph in FIG. 7 is only a part of content of the knowledge graph stored in the server, and the knowledge graph stored in the server may include all boards supported by the CPE equipment "OSN 1800 IE" and information about ports included in all boards.

As shown in FIG. 7, a circle 1 marked with "OSN 1800 IE" indicates the CPE equipment whose name (name) is "OSN 1800 IE". A circle 2 marked with "TMA1G12A" indicates the board whose name (name) is "TMA1G12A". The circle 1 and the circle 2 are connected through one relationship edge. The relationship edge is marked with "supportCard". The relationship edge indicates that the boards supported by the CPE equipment "OSN 1800 IE" include the board "TMA1G12A".

A circle marked with "Port" indicates the port of the board. The board "TMA1G12A" is connected to two circles marked with "Port", indicating that the two ports are the ports of the board "TMA1G12A".

For one port (for ease of description, port 1 for short), a port number (portNum) is 1, a position sequence number (posIndex) is 1, and a port name is TX 1/RX 1. For the other port (port 7 for short), a port number (portNum) is 7, a position sequence number (posIndex) is 7, and a port name is TX 7/RX 7.

The port 1 is connected to the board "TMA1G12A" through two relationship edges, where the two relationship edges respectively represent two services supported by the port 1 on the board. For example, FIG. 7 shows that for one service, a service type (serviceType) is an SDH, a port rate (portRate) is STM-1, and a port signal type (signalType) is optical (optical); and for the other service, a service type is an SDH, a port rate is STM-4, and a port signal type (signalType) is optical (optical).

The port 1 is connected to the board "TMA1G12A" through one relationship edge, where the relationship edge represents one service supported by the port 7 on the board. For example, FIG. 7 shows that for the service, a service type (serviceType) is an SDH, a port rate (portRate) is STM-1, and a port signal type (signalType) is optical (optical).

It should be noted that the diagram of the knowledge graph may also be referred to as a device-board-port-service knowledge graph effect diagram.

In some other embodiments, the server may perform the foregoing steps S501 and S502 when a user imports service knowledge or adds service knowledge. After receiving an obtaining request, the server may perform S503 to S507 to obtain target service data and target port data without a need of performing the foregoing steps S501 and S502.

S503: Calculate a distance between a source address and a sink address, to obtain a target distance.

In some embodiments, the source address and the sink address are door plate addresses, for example, Room No. xx, Unit xx, Building xx, Community xx, City xx, Province xx. The server may determine the distance between the source address and the sink address as the target distance based on map information. It should be understood that the target distance not only refers to a straight-line distance between the source address and the sink address, but may also be a length (for example, a length of an optical fiber) of a path that can be for installing an optical transport network between the source address and the sink address. A method for calculating the distance between the source address and the sink address is not limited herein.

It should be understood that the target distance may alternatively be determined by a user (for example, a customer that requires a target service). This is not limited in this embodiment of this application.

S504: Determine a target service type based on the target distance and a target bandwidth, where an optical transport network service of the target service type supports the target distance and the target bandwidth.

The network service knowledge includes distances and bandwidths supported by different services.

In an implementation, the server may determine, based on distances and bandwidths supported by different services, a service type that supports the target distance and the target bandwidth as a first service type. There may be one or more first service types. In this case, when there is one first service type, the first service type is determined as the target service type. When the first service type is a plurality of service types, the target service type may be selected from the first service types based on at least one factor of existing CPE equipment support conditions at source and sink ends, and stability and price factors.

For example, the server may remove, from the first service types, a service type that is not supported by the CPE equipment that already exists at the source and sink ends, then sort service types existing after removing, and determine a service type that ranks first as the first service type.

The sorting method may be respectively setting corresponding weights and scores for the existing equipment support conditions at the source and sink ends, the price, and the stability, calculating scores of different services, and sorting the services based on the scores.

For example, if the first service type includes a service 1, a service 2, and a service 3, and a source device does not support the service 1, the service 2 and the service 3 may be sorted based on stability and price factors, and a service type that ranks first in the service 2 and the service 3 is used as the recommended service type.

S505: Determine, based on the target bandwidth, a target port rate from port rates supported by the target service type, where the target port rate supports the target bandwidth.

The network service knowledge includes a port rate supported by the target service type. It should be understood that the port rate supported by the service type is within a bandwidth range corresponding to the service type. In other words, the port rate supported by the service type may be obtained based on the bandwidth supported by the service type shown in Table 1. The port rate supported by the service type may also be expressed as a port rate supported by a service of the service type.

In some embodiments, the server may obtain, based on the network service knowledge, the port rate supported by the target service type, and sift out, from the port rate supported by the target service type, a port rate that supports the target bandwidth. When there is one sifted out port rate, the port rate is determined as the target port rate. When there are a plurality of sifted out port rates, a minimum bandwidth matching principle may be used, and a port rate that is in the sifted out port rates and that supports a bandwidth greater than and closest to the target bandwidth is determined as the recommended port rate.

For example, the target bandwidth is 100 Mbit/s, the service type is an SDH, and port rates supported by SDH include STM-1, STM-4, STM-16, and the like. Because STM-1 may support 155 Mbit/s, and 155 Mbit/s is greater than 100 Mbit/s and closest to 100 Mbit/s, the server may determine that the target port rate is STM-1.

Optionally, the target port rate may be determined based on the network service knowledge or the knowledge graph.

For example, assuming that a system of the server is shown in FIG. 3A, the server may query, based on the target bandwidth and the target service type, the knowledge graph for a port rate that meets the target bandwidth and the target service type, to obtain the target port rate.

S506: Determine the target port signal type from port signal types supported by the target service type.

The port signal type includes optical and electrical, and electrical stability is higher than optical stability.

In some embodiments, the server may determine, based on the network service knowledge (for example, Table 1), a port type supported by the target service type. When the target service type supports only one port type, the server determines the port type as the target port signal type. When the target service type supports a plurality of port types, the server determines the target port signal type from the plurality of port types.

It should be noted that the port type supported by the service type is also a transmission mode supported by the service. As shown in Table 1, the transmission mode supported by the SDH is optical and electrical, that is, the port type supported by the service type "SDH" is optical and electrical.

Optionally, the server may determine the target port signal type based on the stability.

For example, when the transmission mode supported by the target service type includes electrical, the port signal type may be recommended as electrical when a customer requires high stability. For example, the SDH service can be based on electrical transmission. If there is a clear requirement for high stability (such as a high available level), the port signal type may be recommended as electrical.

In some other embodiments, if a sink device or a source device supports only a specific port signal type for the target service type, the specific port signal type may be determined as the target port type. For example, if a board TMA1G12A supports only an SDH service optical port, the recommended signal type is optical.

Optionally, the target port signal type may be determined based on the network service knowledge or the knowledge graph.

For example, assuming that a system of the server is shown in FIG. 3A, the server may query, based on the target service type, the knowledge graph for the port signal type supported by the target service type, to obtain the target port signal type.

S507: Determine port information of the source device and the sink device based on the knowledge graph and based on the target service type, the target port rate, and the target port signal type.

The port information may be a board position and a device position of a target port, and may specifically include a device identifier, a board identifier, and a port identifier. For example, the device identifier may include a device name and/or a device serial number (for example, SN), the board identifier may include a board name and/or position information (for example, a slot number (slot-number)) of the board on the CPE equipment, and the port identifier may include at least one of a port name, position information (for example, a position number (port-index)) of the port on the board, and a resource identifier (port-res-id) of the port.

That is, the port information of the source device may be a board position and a device position of a target port (a first port for short) of the source device, and may specifically include a device identifier of the source device, a board identifier, and a port identifier of the first port; and the port information of the sink device may be a board position and a device position of a target port (a second port for short) of the sink device, and may specifically include a device identifier of the sink device, a board identifier, and a port identifier of the second port.

In some embodiments, the server may query the knowledge graph for a relationship edge that meets the target service type, the target port rate, and the target port signal type, and use ports, boards, and devices in which the boards are located that are at two ends of the relationship edge as the port information of the source device and the sink device.

Using determining the port information of the source device as an example, the server may obtain all pieces of CPE equipment at the source address, for example, obtain CPE equipment within a preset distance near the source address. After all pieces of CPE equipment are obtained, for each piece of CPE equipment, relationship edges of the CPE equipment are traversed in the knowledge graph. When a relationship edge that meets the target service type, the target port rate, and the target port signal type is found through traversing, board identifiers and port identifiers at two ends of the relationship edge are obtained, where the board identifier may be a slot number of a board in the CPE equipment, and the port identifier may be a position sequence number of the port on the board, a port number, a port name, and the like of the port, to obtain the port information of the source device.

For example, the CPE equipment of the source address includes "OptiX OSN 1800 I E", and the target service type, the target port rate, and the target port signal type are SDH service, STM-1, and optical respectively. In this case, the server queries "OptiX OSN 1800 I E" in the knowledge graph, queries a relationship edge that meets the SDH service, STM-1, and optical in relationship edges of the board of "OptiX OSN 1800 I E", and determines a slot number and a port number of a board that is in the queried relationship edge as the port information of the source device, for example, "OptiX OSN 1800 I E" supports a board TMA1G12A. The board supports the SDH service, a port rate is STM-1, and a port whose port signal attribute is optical is a port 1/2/7/8. That is, the port information of the source device is that the source device is "OptiX OSN 1800 I E", the board is the board TMA1G12A in a slot 1 on the OptiX OSN 1800 I E, and the port is any one of the port 1/2/7/8 on the board TMA1G12A.

In some other embodiments, the server may not perform the foregoing step S502. In this case, the server may query, based on the service knowledge obtained in S501, a board port of CPE equipment that meets the target service type, the target port rate, and the target port signal type.

It should be understood that knowledge of the knowledge graph is included in the service knowledge. Therefore, based on the service knowledge, a board port of CPE equipment that meets the target service type, the target port rate, and the target port signal type may also be obtained. Because association relationships between devices, boards, ports, and services in the service knowledge are scattered in each knowledge block (for example, a table), a large amount of data needs to be traversed in a query process. The knowledge graph sorts out the association relationships between devices, boards, ports, and services. This can improve a query speed.

Step S404: The server sends a response message to the terminal device, where the response message includes the target service data and the target port data.

Correspondingly, the terminal device receives the response message.

The target service data includes the target service type, the target port rate, and the target port signal type, and the target port data includes the port information of the source device and the sink device.

In some embodiments, the terminal device may invoke the foregoing resource recommendation intent-based API to obtain the target service data and the target port data. A response result of the resource recommendation intent-based API may include the target service type, the target port signal type, the target port rate, a device SN of a source device and/or a sink device, a slot number (slot-number) of a board on which the target port is located on the device, a position number (port-index) of the target port on the board, and a resource ID (port-res-id) of the target port. The resource ID is used for service activation.

For example, the following shows a code implementation of the response result (which may also be referred to as a response body) of the resource recommendation intent-based API.

```
          {
         "service Type": "EoO",
         "signalType":"optical",
         "portRate":"GE",
         " sn":"2102301*******000036",
         "slot-number":3,
         "port-index":3,
         "port-res-id" : "3efb83dd-*******-335dd61a8f84"
          }
```

It can be learned that, for example, the response result shows that the target service type is the EoO, the target port signal type is optical, the target port rate is GE, the device SN of the source device and/or the sink device is 2102301*******000036, the slot number (slot-number) of the board on which the target port is located on the device is 3, the position number (port-index) of the target port on the board is 3, and the resource ID (port-res-id) of the target port is 3efb83dd-*******-335dd61a8f84.

Step S405: The terminal device renders a port diagram based on the target port data.

In some embodiments, the terminal device may generate a port diagram of the source device based on the port information of the source device, and generate a port diagram of the sink device based on the port information of the sink device.

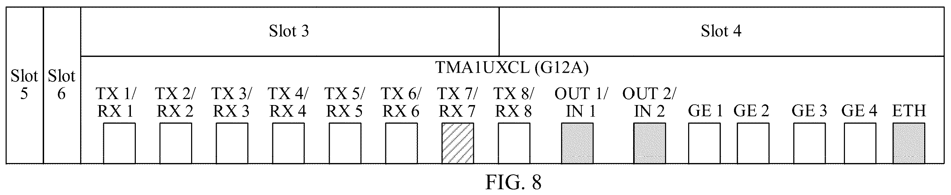

Using the source device as an example, assuming that the port information of the source device is that the target port is the board TMA1G12A in the slot 1 on OptiX OSN 1800 I E, and the port is the port 1/2/7/8 on the board TMA1G12A, the server may render the board TMA1G12A in the slot 1 on OptiX OSN 1800 I E, and further highlight rendering of any one of the port 1/2/7/8 on the board TMA1G12A. For example, refer to FIG. 8.

The highlighting rendering may include rendering a port position by using a preset color or a preset pattern, pointing out a target port by using a mark line and a text description, or the like. This is not limited herein.

FIG. 8 is a port diagram according to an embodiment of this application.

For example, FIG. 8 shows five slots of CPE equipment. A slot 1 is a board "TMA1UXCL (G12A)". A slot 3, a slot 4, a slot 5, and a slot 6 may be specifically inserted with another board or may be idle. As shown in FIG. 8, the board "TMA1UXCL (G12A)" includes 15 ports. In FIG. 8, for example, gray represents an unused port, and a diagonal area represents a target port. As shown in FIG. 8, the target port is a port TX 7/RX 7. It should be noted that, in actual application, the target port may be rendered in green or another color. This is not limited herein.

Step S406: The terminal device displays the target service data and the port diagram, where the target service data and the port diagram are used to provision the target service.

In some embodiments, after rendering the port diagram, the terminal device may display the target service data, the port diagram of the source device, and the port diagram of the sink device.

In a possible application scenario, a staff member may determine hardware (such as an optical fiber, an optical module, CPE equipment, a board, and a target port) of the target service based on the target service data and the port diagram, to complete establishment of an optical path corresponding to the target service, and perform software configuration such as service activation after the optical path is established, to implement provisioning of the target service. For example, the terminal device displays a target work order on an application interface of an installation and maintenance app. A user (for example, installation and maintenance personnel) taps the target work order, and the terminal device displays target service data and a port diagram in response to the user operation. In this way, the installation and maintenance personnel may determine an optical module based on the target service data, and insert the optical module into the target port shown in the port diagram, to complete subsequent service activation and a meter test to provision the target service. The optical module is a connection module between a port and an optical fiber.

In this embodiment of this application, staff members do not need to manually select a device, a board, and a port based on experience, but can determine, based on a port diagram displayed on an installation and maintenance app, port information such as a device, a board, and a port that are corresponding to a target service, to allow insertion of an optical module into the target port. This reduces provisioning time, and avoids mistakes caused by the staff members due to insufficient experience or other reasons.

Optionally, the terminal device may display a first control corresponding to the target service data, a second control corresponding to the port diagram of the source device, and a third control corresponding to the port diagram of the sink device. Further, when receiving a user operation for at least one of the first control, the second control, and the third control, the terminal device displays content corresponding to the control. For example, when receiving a user operation for the first control, the terminal device displays content corresponding to the first control, that is, the target service data.

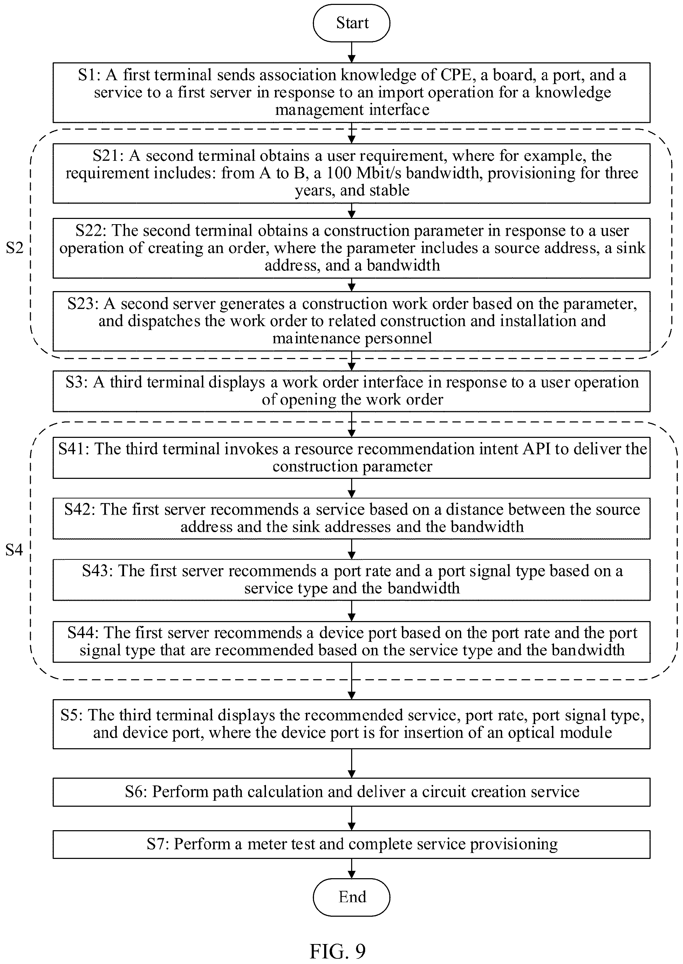

For example, FIG. 9 shows a procedure of another optical transport network service provisioning method according to an embodiment of this application. For example, FIG. 9 shows a whole process of provisioning an optical transport network service.

As shown in FIG. 9, private line provisioning mainly includes three procedures:
(1) Import a knowledge graph, that is, S1. (2) Create a work order based on an intent described by a customer, that is, S2 (which may specifically include S21 to S23). (3) An installation and maintenance app invokes a resource recommendation intent-based API, that is, S4 (which may specifically include S41 to S44).

S1: Import the knowledge graph, which may be specifically as follows.

A system engineer imports association knowledge of CPE, a board, a port, and a service on a knowledge management interface displayed on a first terminal. Correspondingly, the first terminal sends the association knowledge of the CPE, the board, the port, and the service to a first server in response to an import operation on the knowledge management interface. For example, the first terminal is an electronic device of a Huawei engineer, and the first server is a Huawei server.

S2: Create the work order based on a customer description, which may be specifically as follows.

A customer describes a private line requirement of an optical transport network service: for example, from A to B, a 100 Mbit/s bandwidth, provisioning for three years, and stable. Customer service personnel create an order on a second terminal based on the customer description, and the second terminal submits the order to a resource management system by using a service provisioning system, that is, the second terminal sends the order to a second server, where the order may include a source address, a sink address, and a bandwidth, and may further include an available level, and the like. After coordinating resources through the resource management system, the second server generates a construction work order and dispatches the work order to related construction and installation and maintenance personnel. For example, the second terminal is an operator terminal, the second server is an operator server, and the service provisioning system and the resource management system are operator systems.

S3: The installation and maintenance personnel display a work order interface by using an installation and maintenance app on a third terminal, and drive execution of a service provisioning procedure corresponding to the work order, for example, tap the work order. Correspondingly, the third terminal performs S4 in response to the user operation.

S4: Invoke the resource recommendation intent-based API to implement service and port recommendation, which may be specifically as follows.

The third terminal invokes a resource recommendation intent API provided by the first server to deliver three mandatory parameters: a source address, a sink address, and a bandwidth, and an available level and a service level are optional parameters. The first server recommends a service based on a distance between the source address and the sink addresses and the bandwidth (that is, determining the target service type in the foregoing). The first server recommends a port rate and a port signal type based on a service type and the bandwidth (that is, determining the target port rate and the target port signal type in the foregoing). The first server recommends a device port based on the port rate and the port signal type that are recommended based on the service type and the bandwidth (that is, determining the port information of the source device and the sink device in the foregoing).

S5: The third terminal displays the recommended service, port rate, port signal type, and device port. The device port is for insertion of an optical module. For example, the installation and maintenance personnel insert an optical module into the device port recommended on the installation and maintenance app.

S6: A service management and control platform performs path calculation and delivers a circuit creation service.

For example, the third terminal sends information such as the recommended service, port rate, port signal type, and device port to the service management and control platform. The service management and control platform may be a platform of the operator.

S7: The installation and maintenance personnel perform a meter test, and complete service provisioning.

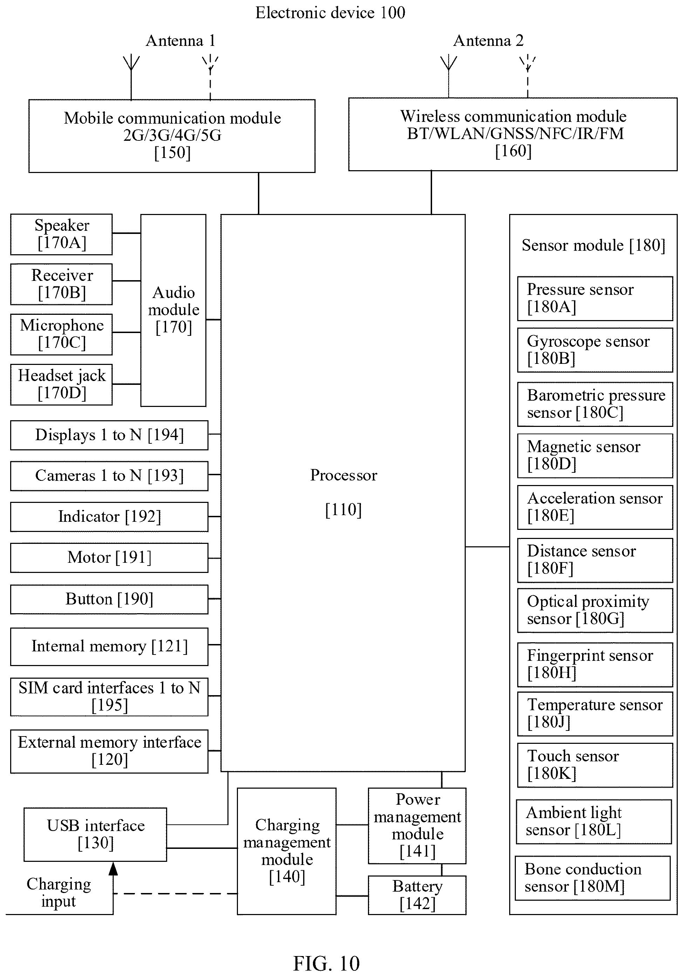

The following describes, for example, an electronic device provided in embodiments of this application. For the terminal device 10 shown in FIG. 2 and the foregoing terminal devices such as the terminal A, the terminal B, and the operator terminal, refer to a hardware structure of an electronic device 100 shown in FIG. 10.

FIG. 10 is a diagram of a hardware structure of the electronic device 100.

The electronic device 100 is used as an example below to describe embodiments in detail. It should be understood that, the electronic device 100 may have more or fewer components than those shown in the figure, may combine two or more components, or may have a different component configuration. The various components shown in the figure may be implemented in hardware, software, or a combination of hardware and software including one or more signal processing circuits and/or application-specific integrated circuits.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through the PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component, for example, the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM card interface may be configured to communicate with the SIM card interface 195, to implement a function of transmitting data to a SIM card or reading data in a SIM card.

The USB interface 130 is an interface that conforms to a USB standard specification, and may be specifically a Mini USB interface, a Micro USB interface, a USB Type C interface, or the like. The USB interface 130 may be configured to be connected to a charger to charge the electronic device 100, or may be configured to transmit data between the electronic device 100 and a peripheral device, or may be configured to connect to a headset for playing audio through the headset. The interface may be further configured to connect to another electronic device, for example, an AR device.

It may be understood that an interface connection relationship between the modules described in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the electronic device 100 and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component.

In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like.

The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like.

The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a shooting function through the ISP, the camera 193, the video codec, the GPU, the display 194, the application processor, and the like.

The ISP is configured to process data fed back by the camera 193. For example, during shooting, a shutter is pressed, light is transferred to a camera photosensitive element through a lens, an optical signal is converted into an electrical signal, and the camera photosensitive element transmits the electrical signal to the ISP for processing, to convert the electrical signal into a visible image.

The ISP may further perform algorithm optimization on noise, brightness, and the like of the image. The ISP may further optimize parameters such as exposure and a color temperature of a shooting scenario.

In some embodiments, the ISP may be disposed in the camera 193.

The camera 193 is configured to capture a static image or a video. An object is projected onto a photosensitive element by generating an optical image through a lens. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal.

The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal.

For example, when the electronic device 100 selects a frequency, the digital signal processor is configured to perform Fourier transform on frequency energy and the like.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external storage card, for example, a Micro SD card, to expand a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing.

The internal memory 121 may include a program storage area and a data storage area.

The program storage area may store an operating system, an application required by at least one function (for example, a facial recognition function, a fingerprint recognition function, and a mobile payment function), and the like. The data storage area may store data (such as facial information template data and a fingerprint information template) created during use of the electronic device 100.

In addition, the internal memory 121 may include a high-speed random access memory, and may further include a non-volatile memory, for example, at least one magnetic disk storage component, a flash memory component, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music or listen to a hands-free call through the speaker 170A. The receiver 170B, also referred to as an "earpiece", is configured to convert an audio electrical signal into a sound signal.

When the electronic device 100 answers a call or voice information, the receiver 170B may be placed close to the human ear to answer the voice. The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100.

In some other embodiments, two microphones 170C may be disposed in the electronic device 100, to collect a sound signal and implement a noise reduction function.

In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset.

The headset jack 170D may be the USB interface 130, or may be a 3.5 mm open mobile electronic device platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194.

There are a plurality of types of pressure sensors 180A, such as a resistive pressure sensor, an inductive pressure sensor, and a capacitive pressure sensor.

The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A.

In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during shooting.

For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic gaming scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D.

In some embodiments, when the electronic device 100 is a clamshell phone, the electronic device 100 may detect opening and closing of a flip cover based on the magnetic sensor 180D. Further, a feature like automatic unlocking of the flip cover is set based on a detected opening or closing state of a leather case or a detected opening or closing state of the flip cover.

The acceleration sensor 180E may detect magnitudes of acceleration of the electronic device 100 in all directions (usually on three axes). When the electronic device 100 is still, a magnitude and a direction of gravity may be detected. The acceleration sensor 180E may be further configured to identify a posture of the electronic device, and is used in applications such as switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode.

The electronic device 100 emits infrared light outwards through the light-emitting diode. The electronic device 100 uses the photodiode to detect infrared reflected light from a nearby object. When detecting sufficient reflected light, the electronic device may determine that there is an object near the electronic device 100.

When detecting insufficient reflected light, the electronic device 100 may determine that there is no object near the electronic device 100. The electronic device 100 may detect, by using the optical proximity sensor 180G, that the user holds the electronic device 100 close to the ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during shooting.

The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like.

The temperature sensor 180J is configured to detect a temperature. In some embodiments, the electronic device 100 executes a temperature processing policy by using the temperature detected by the temperature sensor 180J.

For example, when the temperature reported by the temperature sensor 180J exceeds a threshold, the electronic device 100 lowers performance of a processor near the temperature sensor 180J, to reduce power consumption for thermal protection.

In some other embodiments, when the temperature is less than another threshold, the electronic device 100 heats the battery 142 to prevent the electronic device 100 from being shut down abnormally due to a low temperature.

In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194. The touch sensor 180K and the display 194 form a touchscreen, which is also referred to as a "touch control screen". The touch sensor 180K is configured to detect a touch operation performed on or near the touch sensor.

The touch sensor may transfer the detected touch operation to the application processor to determine a type of the touch event. A visual output related to the touch operation may be provided through the display 194.

In some other embodiments, the touch sensor 180K may also be disposed on a surface of the electronic device 100 at a position different from that of the display 194.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback.

For example, touch operations performed on different applications (for example, shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status and a power change, or may be configured to synthesize requests, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication.

In this embodiment of this application, the processor 110 may execute the computer-executable instructions stored in the memory, so that the electronic device 100 performs the optical transport network service provisioning method provided in embodiments of this application.

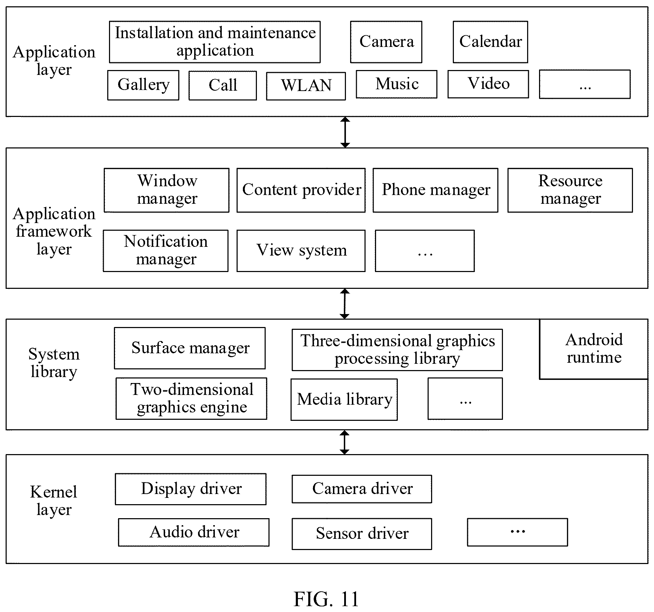

FIG. 11 is a block diagram of a software structure of an electronic device 100 according to an embodiment of this application. The software structure of the electronic device 100 shown in FIG. 11 may be a software structure of the terminal device 10 shown in FIG. 2.

In a layered architecture, software is divided into several layers, and each layer has a clear role and task. The layers communicate with each other through a software interface. In some embodiments, a system is divided into four layers: an application layer, an application framework layer, a runtime (Runtime) and system library, and a kernel layer from top to bottom.

The application layer may include a series of application packages.

As shown in FIG. 11, the application package may include an installation and maintenance application and application programs (which may also be referred to as applications) such as Camera, Browser, Calendar, Call, Map, Navigation, WLAN, Bluetooth, Music, Video, and Messages.

In this embodiment of this application, the terminal device may display a related interface of the installation and maintenance application. For example, the related interface may include a user interface for displaying a work order. Further, in response to a user operation used to query a service parameter of the work order, the terminal device sends an obtaining request to a server to obtain a target service type, port information of a source device, port information of a sink device, and the like. In addition, the terminal device may display content such as the target service type and a port rendering diagram. For a specific implementation process, refer to the foregoing related descriptions. Details are not described herein again.

The application framework layer provides an application programming interface (application programming interface, API) and a programming framework for an application program at the application layer. The application framework layer includes some predefined functions.

As shown in FIG. 11, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application program. The data may include a video, an image, audio, calls that are made and answered, a browsing history and bookmarks, an address book, and the like.

The view system includes visual controls such as a control for displaying a text and a control for displaying an image. The view system may be configured to construct an application program. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application program.

The notification manager enables an application program to display notification information in a status bar, and may be configured to convey a notification type message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application program running in the background, or may be a notification that appears on the screen in a form of a dialog interface. For example, text information is prompted in the status bar, an alert sound is made, the electronic device vibrates, or the indicator light blinks.

The runtime (Runtime) includes a core library and a virtual machine. The runtime is responsible for scheduling and management of the system.

The core library includes two parts: a performance function that needs to be invoked by a programming language (for example, Java language), and a system core library.

The application layer and the application framework layer run on the virtual machine. The virtual machine executes programming files (for example, Java files) of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem, and provide fusion of two-dimensional (2-Dimensional, 2D) and three-dimensional (3-Dimensional, 3D) layers to a plurality of application programs.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement drawing of 3D graphics, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, a sensor driver, and a virtual card driver.

The following describes an example of a working procedure of software and hardware of the electronic device 100 with reference to a shooting scenario.

When the touch sensor 180K receives a touch operation, a corresponding hardware interruption is sent to the kernel layer. The kernel layer processes the touch operation into an original input event (including information such as touch coordinates and a time stamp of the touch operation).

The original input event is stored at the kernel layer. The application framework layer obtains the original input event from the kernel layer, and identifies a control corresponding to the input event. An example in which the touch operation is a single-tap operation, and a control corresponding to the single-tap operation is a control of a camera application icon is used. A camera application invokes an interface of the application framework layer to enable the camera application, then enables the camera driver by invoking the kernel layer, and captures a static image or a video through the camera 193.

An embodiment of this application further provides an electronic device. The electronic device includes one or more processors and one or more memories, the one or more memories are coupled to the one or more processors, the one or more memories are configured to store computer program code, the computer program code includes computer instructions, and when the one or more processors execute the computer instructions, the electronic device is enabled to perform the method described in the foregoing embodiments.

An embodiment of this application further provides a computer program product including instructions. When the computer program product runs on an electronic device, the electronic device is enabled to perform the method described in the foregoing embodiments.

An embodiment of this application further provides a computer-readable storage medium, including instructions. When the instructions are run on an electronic device, the electronic device is enabled to perform the method described in the foregoing embodiments.

It may be understood that the various implementations of this application may be arbitrarily combined to achieve different technical effects.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some of the procedures or functions in this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk, or a magnetic tape), an optical medium (for example, a DVD), a semiconductor medium (for example, a solid-state drive Solid-State Drive), or the like.

A person of ordinary skill in the art may understand that all or some of the procedures of the methods in embodiments may be implemented by a computer program instructing relevant hardware. The program may be stored in the computer-readable storage medium. When the program is executed, the procedures of the foregoing method embodiments may be included. The foregoing storage medium includes any medium that can store program code, such as a ROM, a random access memory RAM, a magnetic disk, or an optical disc.

In summary, what is described above is merely embodiments of the technical solutions of this application, but is not intended to limit the protection scope of this application. Any modification, equivalent substitution, and improvement made based on the disclosure of this application shall fall within the protection scope of this application.

## Claims

1. An optical transport network service provisioning method, applied to a server, wherein the method comprises:
obtaining a target service type, a target port rate, and a target port signal type of an optical transport network service; and
determining a target port of target customer-premises equipment CPE based on an association relationship among a service type, a port rate, a port signal type, and CPE, wherein the target port of the target CPE supports the target service type, the target port rate, and the target port signal type, and the target port of the target CPE is configured to establish an optical path of the optical transport network service.

2. The method according to claim 1, wherein the association relationship comprises an association relationship of the target CPE, the association relationship of the target CPE comprises at least one board on the target CPE, at least one port on the at least one board, and a service type, a port rate, and a port signal type that are supported by the at least one port, and the at least one port comprises the target port.

3. The method according to claim 1 or 2, wherein the target port of the target CPE comprises a device identifier of the target CPE, position information of the target port on a target board of the target CPE, and position information of the target board on the target CPE.

4. The method according to any one of claims 1 to 3, wherein the determining a target port of target customer-premises equipment CPE based on an association relationship among a service type, a port rate, a port signal type, and CPE comprises:
generating a knowledge graph based on the association relationship, wherein the knowledge graph comprises a board, a port, a device, a first relationship edge, and a second relationship edge, the first relationship edge indicates an association relationship between CPE and a board, and the second relationship edge indicates an association relationship among a board and a port, and a service type, a port rate, and a port signal type that are supported by a port on a board;
searching the knowledge graph for a second relationship edge that supports the target service type, the target port rate, and the target port signal type;
determining the target board and the target port based on the found second relationship edge; and
determining the target CPE based on a first relationship edge corresponding to the target board.

5. The method according to any one of claims 1 to 4, wherein the obtaining a target service type, a target port rate, and a target port signal type of an optical transport network service comprises:
obtaining a service intent of the optical transport network service, wherein the service intent comprises a source address, a sink address, and a target bandwidth; and
determining the target service type, the target port rate, and the target port signal type based on the service intent.

6. The method according to claim 5, wherein the determining the target service type, the target port rate, and the target port signal type comprises:
determining the target service type based on a target distance between the source address and the sink address and the target bandwidth, wherein the optical transport network service of the target service type supports the target distance and the target bandwidth;
determining, based on the target bandwidth, the target port rate from port rates supported by the target service type, wherein the target port rate supports the target bandwidth; and
determining the target port signal type from port types supported by the target service type.

7. The method according to claim 6, wherein the determining the target service type comprises:
obtaining service types that support the target distance and the bandwidth; and
determining, based on a price and stability of the service type, the target service type from the obtained service types.

8. The method according to any one of claims 5 to 7, wherein the obtaining a service intent of the optical transport network service comprises: receiving an obtaining request sent by a terminal device, wherein the obtaining request comprises the service intent of the optical transport network service; and
after the determining a target port of target customer-premises equipment CPE, the method further comprises: sending a response message to the terminal device, wherein the response message comprises the target port of the target CPE; and the terminal device is configured to display the target port of the target CPE.

9. The method according to claim 8, wherein the response message further comprises the target service type, the target port rate, and the target port signal type.

10. The method according to any one of claims 1 to 9, wherein the target CPE comprises a source device and/or a sink device, the target port of the target CPE comprises a port of the source device and/or a port of the sink device, and the source device and the sink device are devices at two ends of the optical path of the optical transport network service.

11. An optical transport network service provisioning method, applied to a server, wherein the method comprises:
obtaining a service intent of an optical transport network service, wherein the service intent comprises a source address, a sink address, and a target bandwidth; and
determining, based on the service intent, a target service type, a target port rate, and a target port signal type of the optical transport network service.

12. The method according to claim 11, wherein the determining a target service type, the target port rate, and the target port signal type of the optical transport network service comprises:
determining the target service type based on a target distance between the source address and the sink address and the target bandwidth, wherein the optical transport network service of the target service type supports the target distance and the target bandwidth;
determining, based on the target bandwidth, the target port rate from port rates supported by the target service type, wherein the target port rate supports the target bandwidth; and
determining the target port signal type from port types supported by the target service type.

13. The method according to claim 12, wherein the determining the target service type comprises:
obtaining service types that support the target distance and the bandwidth; and
determining, based on a price and stability of the service type, the target service type from the obtained service types.

14. An optical transport network service provisioning method, applied to a terminal device, wherein the method comprises:
displaying a work order, wherein the work order comprises a service intent of an optical transport network service, and the service intent comprises a source address, a sink address, and a target bandwidth;
sending an obtaining request to a server in response to a user operation on the work order, wherein the obtaining request comprises the service intent, and the service intent is used by the server to determine a service parameter of the optical transport network service;
receiving a response message sent by the server, wherein the response message comprises the service parameter; and
displaying the service parameter and/or a service parameter-based generated diagram wherein the service parameter is for provisioning of the optical transport network service.

15. The method according to claim 14, wherein the service parameter comprises at least one of the following: a target service type, a target port rate, a target port signal type of the optical transport network service, and a target port of target customer-premises equipment CPE, wherein
the target port of the target CPE supports the target service type, the target port rate, and the target port signal type, and the target service type, the target port rate, and the target port signal type are determined based on the service intent.

16. The method according to claim 15, wherein the service parameter comprises the target port of the target customer-premises equipment CPE, the target port of the target CPE comprises a device identifier of the target CPE, position information of the target port on a board of the target CPE, and position information of the board on the target CPE, the service parameter-based generated diagram is a port diagram, and the method further comprises:
rendering the port diagram based on the target port of the target CPE, wherein the port diagram indicates a position of the target port in the target CPE.

17. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 16.

18. A server, comprising a module configured to perform the method according to any one of claims 1 to 13.

19. An electronic device, comprising a module configured to perform the method according to any one of claims 14 to 16.

20. A computer program product comprising instructions, wherein when the computer program product runs on an electronic device, the electronic device is enabled to perform the method according to any one of claims 1 to 16.

21. A computer-readable storage medium, comprising instructions, wherein when the instructions are run on an electronic device, the electronic device is enabled to perform the method according to any one of claims 1 to 16.
